# EUROPEAN PATENT SPECIFICATION

(11) **EP 0 530 270 B1**
(45) Date of publication and mention of the grant of the patent: **09.08.1995**
(21) Application number: 91909968.9
(22) Date of filing: 23.05.1991
(51) Int. Cl.: A01K 61/00

(54) **AN ANNULAR BREEDING VESSEL**
RINGFÖRMIGER ZUCHTBEHÄLTER
RESERVOIR D'ELEVAGE ANNULAIRE

(30) Priority: 23.05.1990 NO 902276
(43) Date of publication of application: 10.03.1993
(73) Proprietor: AQUALINE AS, N-7010 Trondheim (NO)
(72) Inventor: STAFF, Per Oystein, N-0260 Oslo 3 (NO)
(74) Representative: Delmar, John-Ake
(86) International application number: NO9100076
(87) International publication number: WO9117653

(56) References cited:
- NO-B- 154 032
- SE-A- 8 800 868
- Brochure, "Hydaq Havmaer", Hydaq AS Stansveien 4, N-0975 Oslo, Aug. 1987.
- Nordisk Aquakultur, Vol. 7, 1988, Mastercare A/S: "Master - Ringen".

## Description

The invention relates to a breeding vessel. A breeding vessel generally is a fishing net made form seine material which is used for breeding fish and to store fish that was caught alive.

More precisely, the invention relates to a breeding vessel comprising an immersible net, at least two annular buoyancy means which are concentrically arranged and located adjacent each other with an approximately circular shape for location at the water surface, and fittings or mountings holding the at least two annular buoyancy means together.

The used annular buoyancy means define and form the circumference of the breeding vessel. Generally, two annular byoyancy means are used, which are then arranged concentrically and relatively close to each other, and are held together by fittings or mountings, which are spaced about the circumference. In addition to holding the buoyancy means together said mountings also serve as supports for a handrail, for suspension of the net, for mounting footbridges, etc. In the breeding vessels known at present both buoyancy means and fittings are made from suitable plastic material, e.g. polyethylene. Breeding vessels are afloat on the sea and they will be subjected to elemental forces, primarily waves and currents. A fracture or a collapse of one breeding vessel may have disastrous consequences, especially the consequences to the environment may be disastrous if, e.g. diseased or infected fish is allowed to escape.

By itself alone, plastic material of various kinds is a suitable material for breeding vessels, both from manufacture and utilization considerations. Buoyancy means in the shape of tubes filled with air or a buoyancy material may advantageously be manufactured from plastic and be provided with a desired shape, and the fittings or mountings may also be manufactured from plastic in a relatively simple and inexpensive manner by utilization of various kinds of production technologies. A disadvantage of plastic materials, however, is that there are strong elements of uncertainty as to their wear life. It is, thus, difficult to predict and/or guarantee the wear life of a breeding vessel.

It is an object of the present invention to provide a structure of a breeding vessel which may be verified, i.e. that its dimensioning elements are to be of a verifiable kind, so that it will be possible to calculate/estimate and/or guarantee the wear life of a breeding vessel with a higher degree of certainty.

According to the invention this will in practice mean that primarily steel, being an accepted verifiable material, is introduced into the structure to form the dimensioning material.

According to the invention an annular breeding vessel is proposed, which is further defined by the fact that the vessel further comprises means by the aid of which the net is fastened to and supported by the annular buoyancy means, a polygonal structure which is deformable and thus capable of absorbing substantially circumferential tensioning forces, and made from a verifiable material, e.g. steel, and provided between two of said annular buoyancy means, means connecting the polygonal structure with the fittings, and a number of anchoring lines extending outwards from the polygonal structure.

The annular structure of the main supporting system will determine the capability of the breeding vessel to resist elemental forces. The annular buoyancy means may advantageously be designed to be plastic tubes as previously. Whereas the annular structure only shows circumferential yield strength and, thus, may be arranged to form corners about the circumference, the plastic tubes will on the other hand only show slight flexural strength. Their longitudinal strength will only be 0.5% - 1% of that of the annular structure, if the polygonal structure according to an advantageous practical embodiment is designed to be a steel chain structure. Besides, with time, the tensions in the plastic tubes will be reduced due to shrinkage.

The breeding vessel is advantageously tension-anchored by the aid of a number of anchoring lines, which extend from the circumference of the breeding vessel and are secured to the annular fitting structure. The anchoring lines constitute elements of the main support system of the breeding vessel in the horizontal plane. The plastic tubes which constitute the annular buoyancy means, on the other hand, are not supposed to contribute to the dimensioning resistance of the breeding vessel during maximum load conditions (breaking point condition), their main object is, as before, to provide sufficient buoyancy for the breeding vessel.

An especially advantageous embodiment, as indicated above, is an embodiment in which the annular structure is a steel chain structure, and in which the fittings are also, advantageously, made of steel. Steel is an accepted and verifiable material.

Another possibility is an embodiment of the breeding vessel with fittings made of steel and with the annular structure constituting a steel wire structure.

When a chain or wire structure is used, the chain or wire may be continuous and connected with each fitting, or the chain, and especially the wire, may advantageously be intermittent, i.e. consist of short structure members acting as tensioning stays between the separate fittings about the circumference of the breeding vessel.

In order to ensure the movement of the annular buoyancy means relative to the annular structure when the shape of the breeding vessel changes when subjected to a load, suitable linings may advantageously be provided between the fittings and the bodies of buoyancy means.

The number of anchoring lines may vary, but in an advantageous embodiment of an approximately circular breeding vessel four anchoring lines are used and are evenly distributed along the circumference, each anchoring line advantageously being split into two or more anchorage points on the breeding vessel, so as to provide a more even distribution of the points of attack about the circumference.

As a consequence of the special embodiment of the annular structure the anchoring lines are advantageously fastened to the respective fittings in the fitting-annular structure.

The dominating loads to which a breeding vessel according to the invention is subjected will result from bias and the elemental forces from waves and currents.

The horizontal wave forces will be relatively low due to the slight draught of the buoyancy means, the approximately circular shape of the breeding vessel and the great dampening contribution of the net. With sensible anchorage of the plant, e.g. as mentioned by the aid of four or, if desired, six radial anchoring lines, there is reason to believe that the breeding vessel will substantially be subjected to a static load with the current load being dominating.

The great flexibility of the buoyancy means (plastic tubes) will cause the breeding vessel to move with the vertical wave movements without, e.g. the chain or anchorage used being subjected to any substantial load.

When the force in the anchoring lines increases, the chain will straighten between anchoring points. Resistance against this movement is due to bending resistance and axial rigidity of the plastic tubes. In case of plastic tubes lacking rigidity, the annular breeding vessel will show a substantially octagonal shape assuming four anchoring lines.

When the load on the plant is dominated by the biasing forces, the shape will be approximately circular. As the load from elementary forces increases the chain force about the breeding vessel will change. On the side facing the direction of load the chain will be tensioned and straightened, whereas the chain force on the opposite side of the breeding vessel will not change much. Even if the plastic tubes are not locked to the fittings, they will be subjected to a load when the shape of the breeding vessel is changed. However, resistance from the plastic tubes is not necessary to resist a collapse of the structure. Its resistance against breaking will be determined solely by the capacity of chain and the anchoring lines.

In a state close to breaking point it will, thus, be necessary to calculate the extent of corner formation in the anchorage points and whether the plastic tubes are sufficiently soft to conform to the corners without being damaged.

Varying loads from waves may determine the life of plastic tubes in areas with high changes of extension (fatigue).

When checking a state of accident it will be natural to examine the state after fracture of an anchoring line and with a load in a corresponding direction. With four anchoring lines as suggested, such a state will cause only two of the remaining anchoring lines to be active, at the same time the structure will show much displacement in the direction of the load. In this state the breeding vessel will depend on the resistance of the plastic tubes to prevent them from collapsing. The plastic tube sections extending on the side facing the current (dominating load) will then act as a pressure arch. If the plastic tubes are not able to resist this load, the top of the breeding vessel will collapse. This need not cause damage to the net because the chain will prevent the space between fittings from increasing. The hazard of drift of the breeding vessel is then determined by the capacity of the two remaining active anchoring lines.

Instead of four anchoring lines the breeding vessel may, as indicated above, e.g. be anchored by a higher number of lines, e.g. six. It will then substantially keep its shape even if one of the anchoring lines is removed. Such a concept will, however, both be more expensive and more awkward than an embodiment with four anchoring lines.

Any hazard of the breeding vessel sinking due to damage of the plastic tubes used for annular buoyancy means may be prevented by having one of them filled with a suitable buoyancy material, e.g. the material known as "Syndolitt".

The invention will be disclosed in more detail below with reference to the drawings, in which
- Figure 1: shows the new main support system of the breeding vessel in the horizontal plane;
- Figure 2: shows a section of a breeding vessel according to the invention;
- Figure 3: is an enlarged sectional view along line III-III in Figure 2;
- Figure 4: is a diagrammatical view of a state of deformation of the breeding vessel in case of a load along one anchoring line;
- Figure 5: shows a corresponding state of deformation in case of a direction of load between two anchoring lines; and
- Figure 6: shows a state of displacement in case of a broken anchoring line.

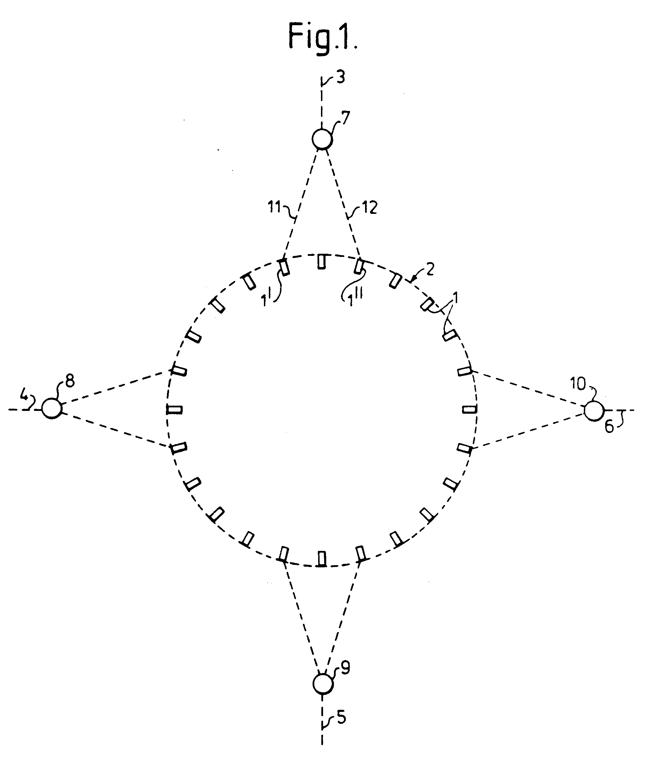

Figure 1 shows the dimensioning main support system of the breeding vessel in the horizontal plane. It is assumed that fittings or mountings 1 are made from a suitable steel material, and a polygonal structure 2 in the shape of a steel chain extends about the circumference of the approximately circular breeding vessel.

The steel chain 2 is fastened to each of the mountings 1.

The annular breeding vessel is tension-anchored, in the present case by the aid of four anchoring lines 3, 4, 5 and 6. At a respective buoy 7, 8, 9, 10 each of the latter is split into two lines 11, 12 (see anchoring line 3). Each of said branch lines 11, 12 extends to a respective fitting 2', 1''.

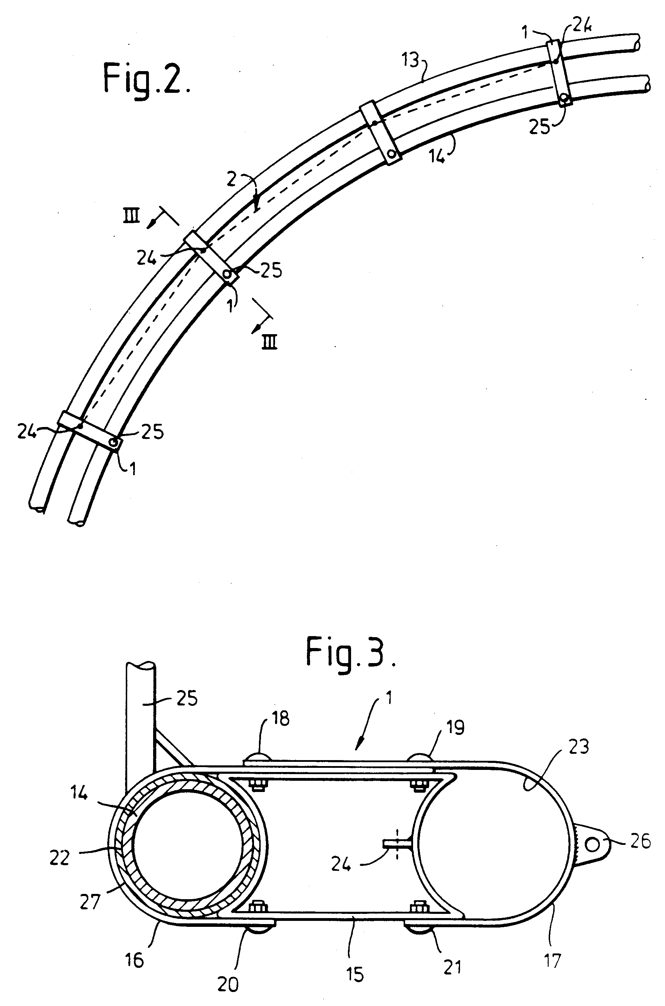

Figures 2 and 3 show more structural details of the breeding vessel proper. It will appear from Figure 2 that the breeding vessel in the present case is built from two annular or doughnut-shaped buoyancy means 13, 14 which are made from plastic tubes welded together to form two closed rings.

Said two annular buoyancy means 13, 14 are held together as shown, by the aid of fittings or mountings 1, which are evenly spaced along the circumference of the breeding vessel and the design of which is shown in more detail in the sectional view of Figure 3.

It will appear from Figure 3 that each mounting 1 is built from elements shaped from flat steel bars. Each mounting comprises an intermediate member 15 acting as a spacer between buoyancy means 13, 14 and two equal strap members 16, 17 which are connected with the intermediate member 15 by the aid of screws 18-21 and associated nuts. Screws 18-21 are inserted in elongated holes (not shown) to permit any necessary adjustment and tensioning of the strap members 16, 17 relative to the intermediate member 15 and the plastic tubes 13, 14 sitting in openings 22, 23.

As shown, a lug 24 is welded to the intermediate member 15 for connection of the chain 2. Said chain 2, thus, extends from one fitting to the next, as shown in Figure 2.

Banister posts 25 are welded to the mounting 1, as shown in Figure 3. Also, an anchoring lug 26 for connection of the anchoring lines is welded to the mounting. Such anchoring lugs may be provided on all fittings or mountings, or only on some of them, i.e. those intended for use as anchorage points.

Between each plastic tube 13, 14 and the respective strap member 16, 17 and intermediate member 15 a suitable lining 27 is provided (lining and plastic tubes are only shown on the left hand side of Figure 3).

The diameter of the breeding vessel may vary, e.g. between 13 meters and 29 meters. In a practical embodiment, as shown, a chain 2 may be placed between two annular plastic tubes 13, 14, which chain 2 is connected with the tubes by the aid of steel fittings 1 in a spaced arrangement of 2 to 2.5 meters.

As shown, the breeding vessel is loosely anchored by four main anchoring lines 3, 4, 5, 6, each of which being distributed to two anchorage points 1', 1'' (fittings) on the breeding vessel proper. Forces of anchorage are led to the chain, via the fittings.

The dominating loads on such an unattended plant, represented by the approximately circular breeding vessel, will result from the bias and the elemental forces from waves and currents.

The horizontal wave forces will be relatively low due to the slight draught of the plastic tubes 13, 14, the circular shape of the breeding vessel proper, and the high damping contribution of the net (not shown). With sensible anchorage of the plant there is, thus, reason to assume that it will mainly be subjected to static loads with the current load being dominating.

The high flexibility of the plastic tubes 13, 14 will cause the breeding vessel to accompany the vertical movements of the waves without the chain 2 or the anchorage 3, 4, 5, 6 being subjected to any substantial load.

When the force of the anchorage lines 3, 4, 5, 6 is increased, the chain 2 will be straightened between the anchorage points. Any resistance against such movement is due to the bending resistance and axial rigidity of the plastic tubes.

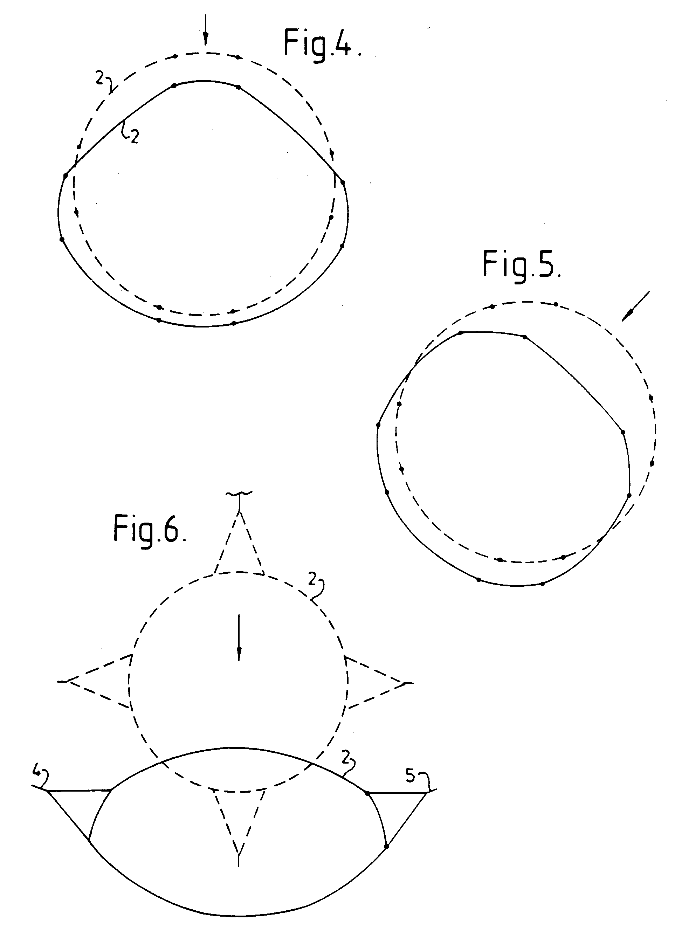

As long as the load on the plant is dominated by the biasing forces the shape will be approximately circular. As the load of the elemental forces increases the chain force around the breeding vessel will change. On the side facing the direction of the load the chain will be tensioned and straightened, whereas the chain force on the opposite side of the breeding vessel will experience small change. This is illustrated for two different directions of load in Figure 4, and Figure 5, respectively. In Figure 4 the state of deformation of the main supporting system is diagrammatically illustrated in case of a load along an anchoring line. An arrow designated "direction of load" symbolizes the load along an anchoring line. The separate anchorage points are indicated as such and one of them is designated "anchorage point".

It will appear from Figure 4 that the breeding vessel will be flattened in outline, as indicated by a full line (the normal shape of the breeding vessel is shown in a dashed line). The chain 2 is tensioned and straightened where it faces the direction of load, whereas the chain force on the opposite side is only slightly changed, as indicated.

In Figure 5 the state of deformation is shown in a case with the direction of load being placed between two anchoring lines. In this case as well, it will appear that the chain force is only slightly changed on the lee, whereas the chain is tightened on the side facing the load.

Even if the plastic tubes 13, 14 are not locked to the steel fittings 1 the latter will be subjected to load when the shape of the breding vessel changes. Resistance from the plastic tubes is, however, not necessary to avoid a collapse of the structure.

The resistance against breaking of the structure will solely be determined by the capacity of the chain and the anchoring lines.

For a state of breaking point it will, thus, be necessary to calculate how large a corner will occur in the anchorage points and whether the plastic tubes are sufficeintly soft to conform with such a corner without being damaged.

A varying load from waves may be decisive to the life of the plastic tubes in areas with severe changes of expansion (fatigue).

In case of checking a state of accident it will be obvoius to examine the state upon fracture of an anchoring line and with a load in the corresponding direction. With anchoring lines 3, 4, 5, 6 as proposed such a state will only cause two of the remaining anchoring lines to be active, at the same time as the structure shows great displacements in the direction of the load. Such a case is illustrated in Figure 6. The normal circular shape/state of the breeding vessel is indicated by dashed lines, whereas the situation upon displacement in case of a fracture of an anchoring line is indicated with full lines.

In such a state the breeding vessel will depend on the resistance of the plastic tubes to prevent collapse. Portions of the plastic tubes on the side facing the direction of current (direction of load), i.e. the dominating load, will then act as a pressure arch.

If the plastic tubes are unable to resist this load the breeding vessel will collapse on top, but this does not necessarily cause damage to the net (not shown), because the chain 2 will prevent the distance between fittings from increasing. The hazard of free drift of the breeding vessel is then determined by the capacity of the two remaining active anchoring lines (indicated as lines 4 and 5 in Figure 6).

## Claims

1. A breeding vessel comprising an immersible net, at least two annular buoyancy means (13, 14) which are concentrically arranged and located adjacent each other with an approximately circular shape for location at the water surface, and fittings or mountings (1) holding the at least two annular buoyancy means (13, 14) together,
means by the aid of which the net is fastened to and supported by the annular buoyancy means (13, 14),
a polygonal structure (2) which is deformable and thus capable of absorbing substantially circumferential tensioning forces, and made from a verifiable material, e.g. steel, and provided between two of said polygonal buoyancy means (13, 14),
means (24) connecting the polygonal structure (2) with the fittings (1), and
a number of anchoring lines (3, 4, 5, 6, 11, 12) extending outwards from the polygonal structure (2).

2. A breeding vessel according to claim 1, **characterized in** that the breeding vessel is tensioned by the aid of said anchoring lines (3, 4, 5, 6), which extend from the circumference of the breeding vessel.

3. A breeding vessel according to claim 1 or 2, **characterized in** that the fittings (1) are made of steel and that the polygonal structure (2) is a steel chain structure.

4. A breeding vessel according to claim 1 or 2, **characterized in** that the fittings (1) are made of steel and that the polygonal structure (2) is a steel wire structure.

5. A breeding vessel according to claim 3 or 4, **characterized in** that the polygonal structure (2) is continuous.

6. A breeding vessel according to any of the preceding claims, **characterized** by a lining (27) between the fittings (1, 16, 17) and the bodies of the buoyancy means (13, 14).

7. A breeding vessel according to claims 2-6, **characterized in** that each anchoring line (3, 4, 5, 6) is split into two or more anchorage points (1', 1'') on the breeding vessel.

8. A breeding vessel according to any of the preceding claims, **characterized in** that the anchoring lines (3, 4, 5, 6) are fastened to the respective fittings (1', 1'').

9. A breeding vessel according to any of the preceding claims and with two concentric annular buoyancy means (13, 14), **characterized in** that the polygonal structure (2) is placed within the space between the concentric buoyancy means (13, 14).

## Patentansprüche

1. Zuchtbehälter mit einem versenkbaren Netz, wenigstens zwei ringförmigen Schwimmkörpern (13, 14), die konzentrisch angeordnet sind und sich zur Anordnung an der Wasseroberfläche mit einer ungefähr kreisförmigen Gestalt nebeneinander befinden, und Halterungen oder Befestigungen (1) zum Zusammenhalten der wenigstens zwei ringförmigen Schwimmkörper (13, 14),
Einrichtungen, mit deren Hilfe das Netz an den ringförmigen Schwimmkörpern befestigt und von diesen getragen wird,
einer polygonalen Struktur (2), die verformbar ist und dadurch im wesentlichen Umfangsspannungskräfte absorbieren kann, und die aus einem verifizierbaren Material, z.B. Stahl, besteht und zwischen zwei polygonalen Schwimmkörpern (13, 14), angeordnet ist,
einer die polygonale Struktur (2) mit den Halterungen (1) verbindenden Verbindungseinrichtung (24), und
einer Anzahl von Abspannleinen (3, 4, 5, 6, 11, 12), die sich von der polygonalen Struktur (2) nach außen erstrecken.

2. Zuchtbehälter nach Anspruch 1,
dadurch gekennzeichnet, daß der Zuchtbehälter mit Hilfe der Abspannleinen (3, 4, 5, 6) gespannt wird, die sich von der Peripherie des Zuchtbehälters erstrecken.

3. Zuchtbehälter nach Anspruch 1 oder 2,
dadurch gekennzeichnet, daß
die Halterungen (1) aus Stahl sind und daß die polygonale Struktur (2) eine Stahlkettenkonstruktion ist.

4. Zuchtbehälter nach Anspruch 1 oder 2,
dadurch gekennzeichnet, daß
die Halterungen (1) aus Stahl sind und daß die polygonale Struktur (2) eine Strahldrahtkonstruktion ist.

5. Zuchtbehälter nach Anspruch 3 oder 4,
dadurch gekennzeichnet, daß
die polygonale Struktur (2) endlos ist.

6. Zuchtbehälter nach einem der vorhergehenden Ansprüche, gekennzeichnet durch
eine Zwischenlage (27) zwischen den Halterungen (1, 16, 17) und den Körpern der Schwimmkörper (13, 14).

7. Zuchtbehälter nach den Ansprüchen 2 bis 6,
dadurch gekennzeichnet, daß
jede Abspannleine (3, 4, 5, 6) auf zwei oder mehrere Abspannpunkte (1', 1'') auf dem Zuchtbehälter aufgeteilt ist.

8. Zuchtbehälter nach einem der vorhergehenden Ansprüche, dadurch gekennzeichnet, daß
die Abspannleinen (3, 4, 5, 6) an den entsprechenden Halterungen (1', 1'') befestigt sind.

9. Zuchtbehälter nach einem der vorhergehenden Ansprüche und mit zwei konzentrischen, ringförmigen Schwimmkörpern (13, 14), dadurch gekennzeichnet, daß
die polygonale Struktur (2) innerhalb des Raums zwischen den konzentrischen Schwimmkörpern (13, 14) angeordnet ist.

## Revendications

1. Un récipient d'élevage comportant un filet immergé, au moins deux moyens annulaires de flottaison (13,14) qui sont disposés concentriquement et situés en adjacence l'un par rapport à l'autre suivant une forme approximativement circulaire pour être placés à la surface de l'eau, et
des éléments de couplage ou montures (1) maintenant ensemble les deux moyens annulaires de flottaison (13,14),
des moyens à l'aide desquels le filet est assujetti aux deux moyens annulaires de flottaison (13,14) et supporté par ceux-ci,
une structure polygonale (2) qui est déformable et, ainsi, capable d'absorber sensiblement les forces de traction circonférencielles, et qui est constituée en une matière vérifiable, par exemple de l'acier, et prévue entre deux desdits moyens annulaires de flottaison (13,14),
des moyens (24) reliant la structure polygonale (2) aux éléments de couplage (1), et
une pluralité de lignes d'ancrage (3,4,5,6,11,12) s'étendant vers l'extérieur à partir de la structure polygonale (2).

2. Un récipient d'élevage selon la revendication 1, caractérisé en ce que le récipient d'élevage est tendu à l'aide desdites lignes d'ancrage (3,4,5,6) qui s'étendent depuis la périphérie du récipient d'élevage.

3. Un récipient d'élevage selon la revendication 1 ou 2, caractérisé en ce que les éléments de couplage (1) sont constitués en acier et en ce que la structure polygonale (2) est une structure en chaîne d'acier.

4. Un récipient d'élevage selon la revendication 1 ou 2, caractérisé en ce que les éléments de couplage (1) sont constitués en acier et en ce que la structure polygonale (2) est une structure en fil d'acier .

5. Un récipient d'élevage selon la revendication 3 ou 4, caractérisé en ce que la structure polygonale (2) est continue.

6. Un récipient d'élevage selon l'une quelconque des revendications précédentes, caractérisé par une garniture (27) entre les éléments de couplage (1,16,17) et les corps des moyens de flottaison (13,14).

7. Un récipient d'élevage selon les revendications 2-6, caractérisé en ce que chaque ligne d'ancrage (3,4,5,6) est séparée en deux ou plus de deux points d'ancrage(1', 1'') sur le récipient d'élevage.

8. Un récipient d'élevage selon l'une quelconque des revendications précédentes, caractérisé en ce que les lignes d'ancrage (3,4,5,6) sont assujetties aux éléments respectifs d'ancrage (1', 1'').

9. Un récipient d'élevage selon l'une quelconque des revendications précédentes et comportant deux moyens annulaires concentriques de flottaison (13,14), **caractérisé** en ce que la structure polygonale (2) est placée à l'intérieur de l'espace entre les moyens concentriques de flottaison (13,14).
